# EUROPEAN PATENT APPLICATION

(11) **EP 4 529 079 A1**
(43) Date of publication of application: **26.03.2025**
(21) Application number: 24186677.1
(22) Date of filing: 04.07.2024
(51) Int. Cl.: H04L 9/08

(54) **INFORMATION PROCESSING DEVICE, QKD NETWORK SYSTEM, INFORMATION PROCESSING METHOD, AND COMPUTER PROGRAM PRODUCT**

(30) Priority: 19.09.2023 JP 2023150672
(71) Applicant: Kabushiki Kaisha Toshiba, Tokyo 105-0023 (JP)
(72) Inventor: TANIZAWA, Yoshimichi, Tokyo (JP); KATSUBE, Yasuhiro, Tokyo (JP); TAKAHASHI, Ririka, Tokyo (JP); YU, Yu, Tokyo (JP)
(74) Representative: Marks & Clerk LLP

(57) **Abstract**

According to one arrangement, an information processing device (1) includes a processing unit (11) configured to establish encrypted tunnel communication with a second node by using a second encryption key subjected to encrypted relay transmission to the second node by a first encryption key shared, by quantum key distribution, with a plurality of first nodes adjacent to each other. The second node is one of the plurality of first nodes. The processing unit (11) is configured to cause a network interface (IF) unit (12) to transfer a third encryption key to the second node by the encrypted tunnel communication.

## Description

### FIELD

Arrangements described herein relate generally to an information processing device, a QKD network system, an information processing method, and a computer program product.

### BACKGROUND

Quantum key distribution (QKD) is a technology for securely sharing an encryption key between a QKD device that continuously transmits a single photon and a QKD device that receives a single photon, where the QKD devices are connected by an optical fiber link. An encryption key shared by the QKD is guaranteed not to be eavesdropped based on the principle of quantum mechanics.

However, in the conventional technologies, it is difficult to reduce the processing load in an encryption key relay as the scale of a QKD network increases.

### BRIEF DESCRIPTION OF THE DRAWINGS

Fig. 1A is a diagram for Exemplary Illustration 1 of a device configuration of a QKDN system according to an arrangement;
Fig. 1B is a diagram illustrating an example of a key relay according to an arrangement;
Fig. 2A is a diagram for Exemplary Illustration 2 of a device configuration of a QKDN system according to an arrangement;
Fig. 2B is a diagram illustrating an example of a key relay according to an arrangement;
Fig. 3A is a diagram illustrating an outline of Operation Example 1 of a QKDN system according to an arrangement;
Fig. 3B is a diagram illustrating an example of a G key relay via an encrypted tunnel of Fig. 3A;
Fig. 4 is a diagram illustrating an example of a packet data format in the G key relay of Fig. 3B;
Fig. 5A is a diagram illustrating an outline of Operation Example 2 of a QKDN system according to an arrangement;
Fig. 5B is a diagram illustrating an example of a G key relay via an encrypted tunnel of Fig. 5A;
Fig. 6 is a diagram illustrating an example of a functional configuration of a KM according to an arrangement;
Fig. 7 is a diagram illustrating an update example of a packet transfer table according to an arrangement;
Fig. 8 is a flowchart illustrating an operation example of a KM according to an arrangement;
Fig. 9A is a diagram illustrating an outline of an operation example of a QKDN system of a first modification to an arrangement;
Fig. 9B is a diagram illustrating an example of a G key relay via an encrypted tunnel of Fig. 9A;
Fig. 10 is an overall view illustrating an example of a QKDN system according to a first modification to an arrangement;
Fig. 11 is an overall view illustrating an example of a QKDN system according to a second modification to an arrangement;
Fig. 12 is a diagram illustrating an example of a functional configuration of a KM according to an arrangement;
Fig. 13 is a diagram illustrating an example of a hardware configuration of a QKD device according to an arrangement; and
Fig. 14 is a diagram illustrating an example of a hardware configuration of a KM device according to an arrangement.

### DETAILED DESCRIPTION

Hereinafter, arrangements of an information processing device, a QKD network system, an information processing method, and a computer program product are detailed with reference to the accompanying drawings.

Key sharing with QKD is, in principle, limited in communication distance, and only one-to-one key sharing can be used. A QKD network (QKDN) can be configured by introducing, in addition to a QKD device, a key management (key manager; KM) device and allowing the KM to hold and manage a key and to relay the key. This makes it possible to share an encryption key between any two bases in a network having QKD as a link and a KM as a node.

Note that the shared encryption key is provided to an external application from the KM and used. The QKD device and the KM device may be implemented as an integrated device.

### Example of device configuration

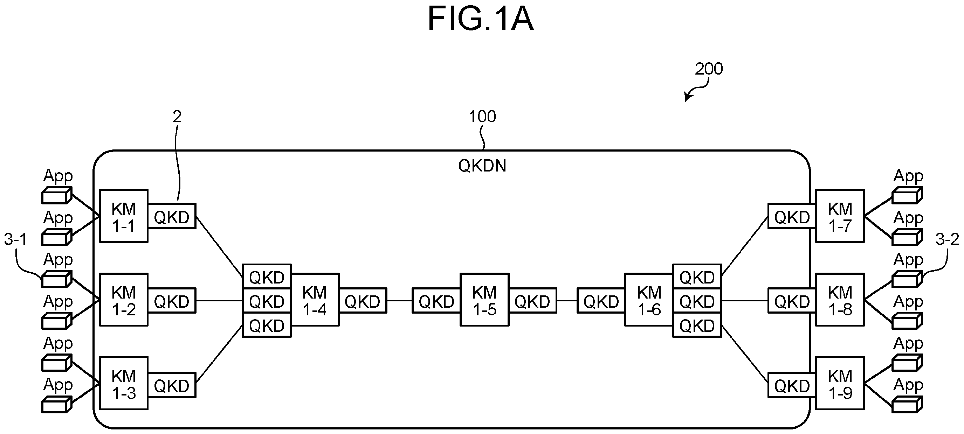

Fig. 1A is a diagram for Exemplary Illustration 1 of a device configuration of a QKDN system 200 according to the arrangement. The QKDN system 200 according to the arrangement includes KMs 1-1 to 1-9, a plurality of QKDs 2, and a plurality of applications including applications 3-1 and 3-2.

Hereinafter, in a case where the KMs 1-1 to 1-9 are not distinguished, they are simply referred to as a KM 1. Similarly, in a case where the applications 3-1 and 3-2 are not distinguished, they are simply referred to as an application 3.

In Fig. 1A, the KM device is abbreviated as KM 1, the QKD device is abbreviated as QKD 2, and the application is abbreviated as App.

The KM 1 receives an encryption key from at least one QKD 2. The KM 1 holds and manages an applicable encryption key and also relays the encryption key between the KMs 1 to enable encryption key sharing between arbitrary KMs 1.

The QKD 2 is a QKD device that executes a QKD protocol with a QKD 2 facing QKD to generate an encryption key. The QKD 2 is connected to the KM 1 and provides the encryption key to the KM 1.

The application 3 is connected to the KM 1, acquires the encryption key from the KM 1, and performs cryptographic communication with another application. The application 3 is usually installed in the same base as the KM 1 to which the application 3 is connected. Note that a plurality of applications 3 may be connected to one KM 1.

The KM 1 and the QKD 2 are installed in a base. The base is a section in which physical safety is ensured. A node including the KM 1 and the QKD 2 may be referred to as a trusted node. The trusted node is installed in each base to thereby guarantee storage of an encryption key, safety in a relay, and the like.

The trusted node installed in each base is connected by a QKD link (quantum cryptographic communication path), so that a QKDN 100 is configured.

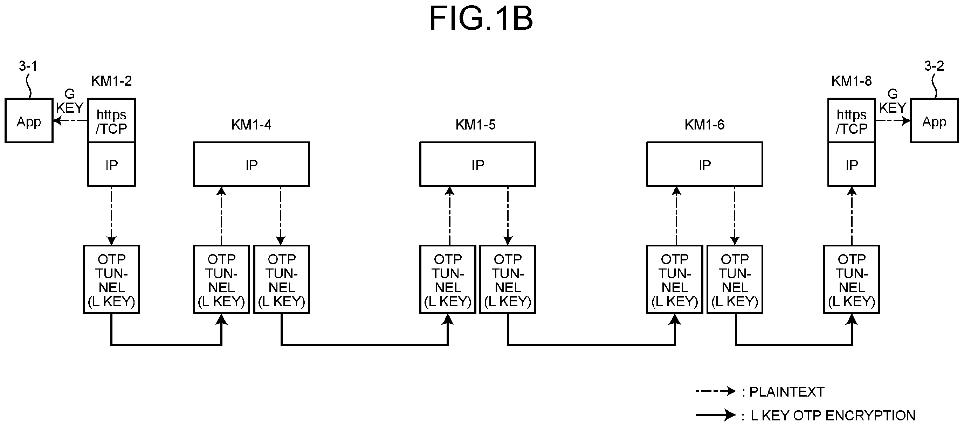

Fig. 1B is a diagram illustrating an example of a key relay according to the arrangement. Fig. 1B illustrates an example of a case where a key is relayed in the configuration illustrated in Fig. 1A. Fig. 1B illustrates an example in which the application 3-1 connected to the KM 1-2 acquires an identical encryption key with the application 3-2 connected to the KM 1-8.

In Figs. 1A and 1B, the KM 1-1 and KM 1-4, the KM 1-2 and KM 1-4, the KM 1-3 and KM 1-4, the KM 1-4 and KM 1-5, the KM 1-5 and KM 1-6, the KM 1-6 and KM 1-7, the KM 1-6 and KM 1-8, and the KM 1-6 and KM 1-9 are each connected by a QKD link, and an encryption key is shared by the QKD protocol.

The encryption key shared by the QKD protocol in this manner is referred to as a local key (L key).

The example of Fig. 1B illustrates a case where the KM 1-2 shares an encryption key with the KM 1-8 via the KM 1-4, the KM 1-5, and the KM 1-6. The KM 1-2 generates an encryption key (hereinafter, referred to as a global key (G key)) generated using a random number generator or the like, independently of the L key.

Note that a function to generate a random number of the random number generator or the like may be provided in the KM 1 or may be provided in an external device connected to the KM 1.

The KM 1-2 encrypts the G key with an L key shared between the KM 1-2 and the KM 1-4 by one-time pad and transfers the encrypted G key to the KM 1-4. The KM 1-4 decrypts the encrypted G key with the L key which is the same L key as used in the KM 1-2 to recover the G key.

The KM 1-4 then encrypts the G key with an L key shared between the KM 1-4 and the KM 1-5 by one-time pad and transfers the encrypted G key to the KM 1-5. The KM 1-5 decrypts the encrypted G key with the L key which is the same L key as used in the KM 1-4 to recover the G key.

The KM 1-5 then encrypts the G key with an L key shared between the KM 1-5 and the KM 1-6 by one-time pad and transfers the encrypted G key to the KM 1-6. The KM 1-6 decrypts the encrypted G key with the L key which is the same L key as used in the KM 1-5 to recover the G key.

The KM 1-6 then encrypts the G key with an L key shared between the KM 1-6 and the KM 1-8 by one-time pad and transfers the encrypted G key to the KM 1-8. The KM 1-8 decrypts the encrypted G key with the L key which is the same L key as used in the KM 1-6 to recover the G key.

Through the above steps, the KM 1-2 and the KM 1-8 can share the identical encryption key (G key). As illustrated in Fig. 1B, the KM 1 performs IP communication to thereby implement one-time pad (OTP) encryption/decryption.

Note that the one-time pad (OTP) encryption/decryption may be implemented by "OTP tunnel communication" using a protocol at a lower layer than the IP (for example, ETHERNET^{®}). (L-key encrypted tunnel)

The application 3-1 requests the encryption key (G key) from the KM 1-2 to acquire the encryption key (G key) shared with the application 3-2. The application 3-2 requests the encryption key (G key) from the KM 1-8 to acquire the encryption key (G key) shared with the application 3-1.

Through the above steps, the application 3-1 and the application 3-2 acquire the identical encryption key (G key) to perform cryptographic communication.

In Fig. 1B, the internal communication of the KM 1 is transmitted as plaintext. Further, communication between the KM 1 and the application 3 is made as plaintext or by encryption such as transport layer security (TLS). In any case, since the KM 1 and the application 3 are installed in the same base, the communication is not decrypted by an eavesdropper.

With the configuration of the QKDN 100 described above, an encryption key (G key) can be shared between arbitrary KMs 1 on the QKDN 100. However, the OTP encryption/decryption processing for key relay is performed by the number of KMs 1 on the relay route. In particular, in the large-scale QKDN 100, a processing load of the QKDN system 200 increases or a processing delay increases due to many key relays.

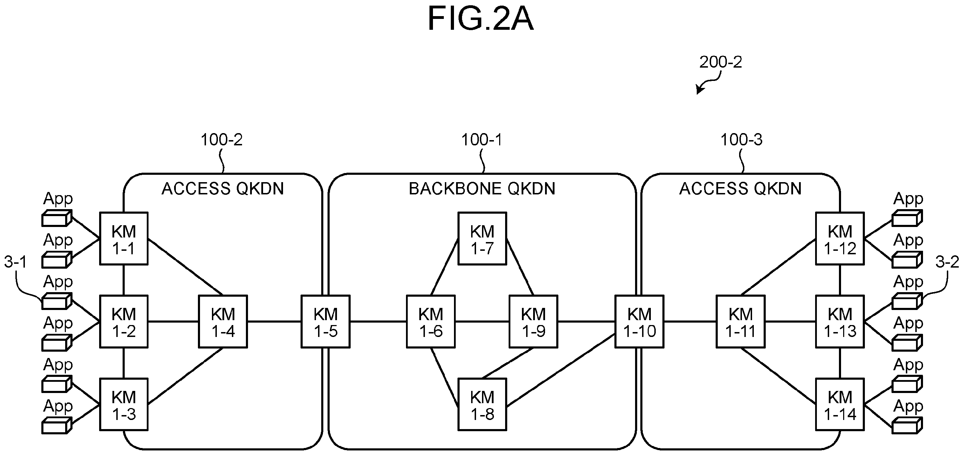

This causes a delay of the key relay, and for example, the encryption key (G key) required by the application 3 cannot be provided in a timely manner. This is a problem related to scalability in which the size of the QKDN 100 makes the problem more pronounced. Fig. 2A illustrates an example in which the problem is obvious.

Fig. 2A is a diagram for Exemplary Illustration 2 of a device configuration of a QKDN system 200-2 according to the arrangement. The example of Fig. 2A illustrates a case of a large-scale QKDN configured by a backbone QKDN 100-1 and access QKDNs 100-2 and 100-3. In Fig. 2A, illustration of the QKD 2 is omitted.

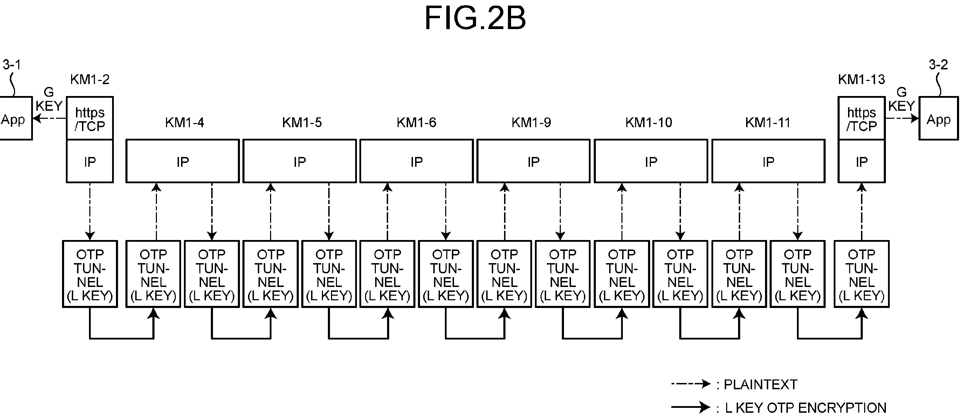

In Fig. 2A, the KMs 1-2 and 1-13 share an encryption key (G key) used by the applications 3-1 and 3-2. In order for the KMs 1-2 and 1-13 to share the encryption key (G key), eight KMs 1 (KM 1-2, KM 1-4, KM 1-5, KM 1-6, KM 1-9, KM 1-10, KM 1-11 and KM 1-13) need to perform encryption/decryption processing on the G key (see Fig. 2B) .

Although Fig. 2A illustrates an example in which the QKDN 100 includes three networks of the backbone QKDN 100-1 and the access QKDNs 100-2 and 100-3, this is merely an example. As illustrated in Fig. 1A, the above problem can occur even with a single QKDN 100. Further, the QKDN 100 may include three or more networks.

Hereinafter, in a case where the backbone QKDN 100-1 and the access QKDNs 100-2 and 100-3 are not distinguished and a case where the QKDNs are collectively referred to, they are simply referred to as the QKDN 100.

First, an overview of how the QKDN system 200-2 of the arrangement operates will be given.

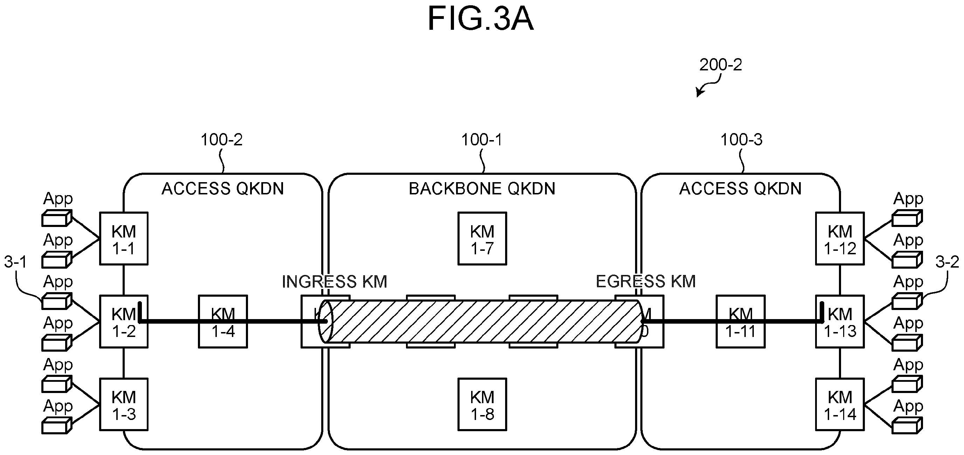

Fig. 3A is a diagram illustrating an outline of Operation Example 1 of the QKDN system 200-2 of the arrangement. As illustrated in Fig. 3A, an "encrypted tunnel" for relaying the G key is established between the KM 1-5 and the KM 1-10.

First, a procedure of how to establish an encrypted tunnel will be described.

Specifically, an encryption key referred to as a middle key (M key) is shared between the KM 1-5 and the KM 1-10. Similarly to the G key, the M key is generated by the KM 1 with a random number generator or the like. Then, the KM 1 encrypts and transmits the M key with the L key by one-time pad to share the M key with an arbitrary KM 1.

In Fig. 3A, the KM 1-5 generates the M key with the random number generator.

The KM 1-5 encrypts the M key with an L key shared with the KM 1-6 by one-time pad and transfers the encrypted M key to the KM 1-6. The KM 1-6 decrypts the encrypted M key with the L key which is the same L key as used in the KM 1-5 to recover the M key.

The KM 1-6 then encrypts the M key with an L key shared between the KM 1-6 and KM 1-9 by one-time pad and transfers the encrypted M key to the KM 1-9. The KM 1-9 decrypts the encrypted M key with the L key which is the same L key as used in the KM 1-6 to recover the M key.

The KM 1-9 encrypts the M key with an L key shared with the KM 1-10 by one-time pad and transfers the encrypted M key to the KM 1-10. The KM 1-10 decrypts the encrypted M key with the L key which is the same L key as used in the KM 1-9 to recover the M key.

Through the above steps, the KM 1-5 and the KM 1-10 can share the identical encryption key (M key).

Note that, as is clear from the above steps, the procedure for sharing the M key and the procedure for sharing the G key are the same. Therefore, the M key and the G key may be shared by substantially the same procedure, or may be shared as the same.

The above is the procedure for sharing the M key for achieving an encrypted tunnel.

Next, a method for relaying the G key via the encrypted tunnel (M-key encrypted tunnel) according to the arrangement will be described.

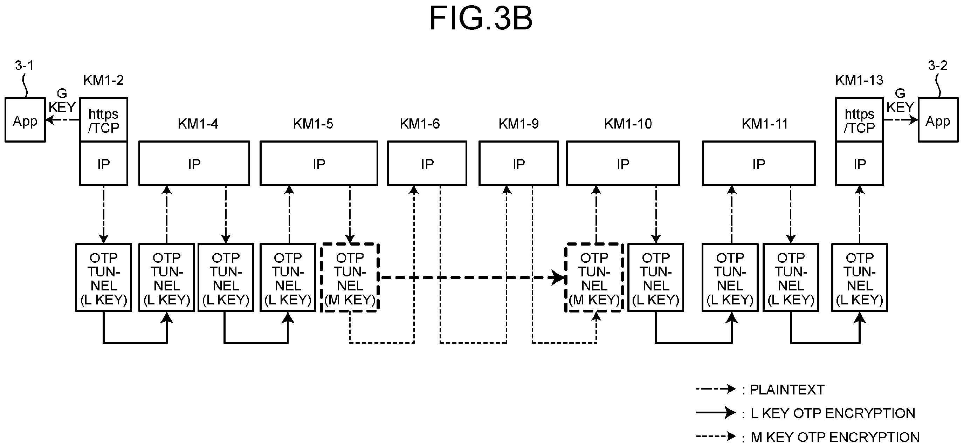

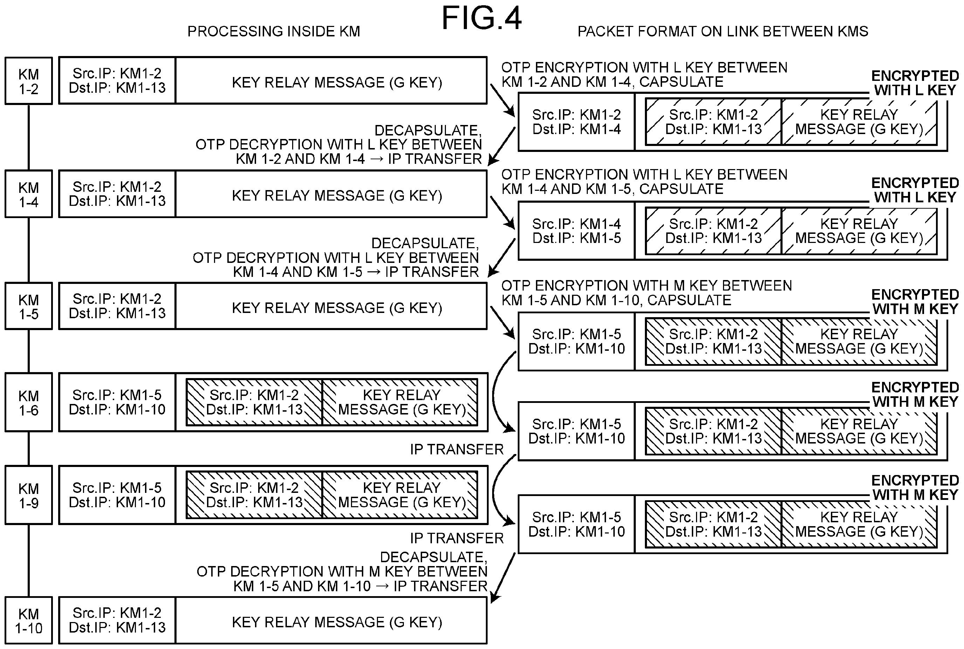

Fig. 3B is a diagram illustrating an example of a G key relay via the encrypted tunnel (M-key encrypted tunnel) of Fig. 3A. Fig. 4 is a diagram illustrating an example of a packet data format in the G key relay of Fig. 3B.

The example of Fig. 3B illustrates a case where the application 3-1 connected to the KM 1-2 shares the same encryption key (G key) with the application 3-2 connected to the KM 1-13.

Hereinafter, a method for relaying the G key in order for the KM 1-2 to share an encryption key (G key) with the KM 1-13 via the KM 1-4, the KM 1-5, the KM 1-10, and the KM 1-11 will be described.

First, the KM 1-2 generates an encryption key (G key) using a function to generate a random number implemented by a random number generator or the like, independently of the L key. The KM 1-2 encrypts a key relay message including the G key addressed to the KM 1-13 with an L key shared between the KM 1-2 and KM 1-4 by one-time pad. The KM 1-2 then encapsulates an IP packet including the key relay message encrypted with the L key in an IP packet whose source is an address of the KM 1-2 and whose destination is the KM 1-4, and transfers the encapsulated IP packet to the KM 1-4.

The KM 1-4 decapsulates the IP packet by decrypting the encrypted key relay message with the L key which is the same L key as used in the KM 1-2 and recovering the key relay message including the G key. Next, the KM 1-4 encrypts the key relay message including the G key with an L key shared between the KM 1-4 and the KM 1-5 by one-time pad. The KM 1-4 then makes encapsulation in an IP packet whose source is an address of the KM 1-4 and whose destination is the KM 1-5 toward the KM 1-5 which is a next-hop toward the KM 1-13 which is the destination of the recovered key relay message, and transfers the encapsulated IP packet.

The KM 1-5 decapsulates the IP packet by decrypting the encrypted key relay message with the L key which is the same L key as used in the KM 1-4 and recovering the encrypted key relay message including the G key.

Next, the KM 1-5 identifies that the next-hop toward the destination KM 1-13 of the recovered key relay message is the KM 1-10, and encrypts the key relay message including the G key (third encryption key) with an M key (second encryption key) shared between the KM 1-5 and the KM 1-10 by one-time pad. The KM 1-5 encapsulates an IP packet (an example of a first communication packet) encrypted with the M key as an IP packet (an example of a second communication packet) whose source is the KM 1-5 and whose destination is the KM 1-10. The KM 1-5 then transfers the encapsulated IP packet to the KM 1-6 which is a next-hop toward the KM 1-10.

The KM 1-6 and the KM 1-10 transfer, as relay KMs, the encapsulated IP packet to the KM 1-10 by transferring the encapsulated IP packet.

The KM 1-10 decapsulates the IP packet by decrypting the encrypted key relay message with the M key which is the same M key as used in the KM 1-5 and recovering the encrypted key relay message including the G key.

The KM 1-10 then encrypts the key relay message including the G key with an L key shared between the KM 1-10 and the KM 1-11 by one-time pad and transfers the encrypted key relay message to the KM 1-11.

The KM 1-11 decrypts the encrypted key relay message with the L key which is the same L key as used in the KM 1-10 to recover the key relay message including the G key. The KM 1-11 then encrypts the key relay message including the G key with an L key shared between the KM 1-11 and the KM 1-13 by one-time pad and transfers the encrypted key relay message to the KM 1-13.

The KM 1-13 decrypts the encrypted key relay message with the L key which is the same L key as used in the KM 1-11, decrypts the key relay message including the G key, and obtains the G key from the key relay message.

Through the above steps, the KM 1-2 and the KM 1-13 can share the identical encryption key (G key).

In the steps of the encryption key (G key) relay described above, the encryption of the G key between the KM 1-5 and the KM 1-10 is made using the M key, which is different from the conventional operation. In the conventional operation, in a case where the KM 1-2 performs an encryption key relay with the KM 1-13, it is necessary to encrypt/decrypt the G key in the eight KMs 1 (KM 1-2, KM 1-4, KM 1-5, KM 1-6, KM 1-9, KM 1-10, KM 1-11 and KM 1-13).

On the other hand, in the method for relaying the G key of the arrangement, in a case where the KM 1-2 performs the encryption key (G key) relay with the KM 1-13, the G key is encrypted/decrypted in the six KMs 1 (KM 1-2, KM 1-4, KM 1-5, KM 1-10, KM 1-11 and KM 1-13), and the procedure for relaying the encryption key is simplified.

Also in the arrangement, as illustrated in Fig. 3B, it is possible that the KM 1-6 and the KM 1-9 operate as IP routers and transfer the G key data (key relay message) encrypted with the M key. However, the KM 1-6 and the KM 1-9 are not involved in the encryption and decryption of the G key.

Further, as illustrated in Fig. 4, the object to be encrypted may be the entire IP packet including the G key data included in the payload, or may be only the G key data included in the payload.

As illustrated in Fig. 3B, the KM 1 as a start point of a key relay using an encrypted tunnel with the M key is referred to as an ingress KM, and the KM 1 as an end point of the key relay using the encrypted tunnel with the M key is referred to as an egress KM.

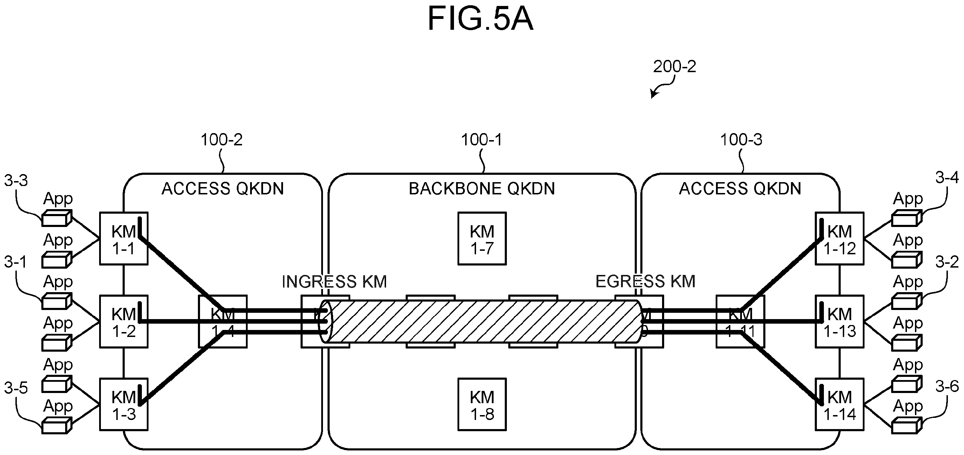

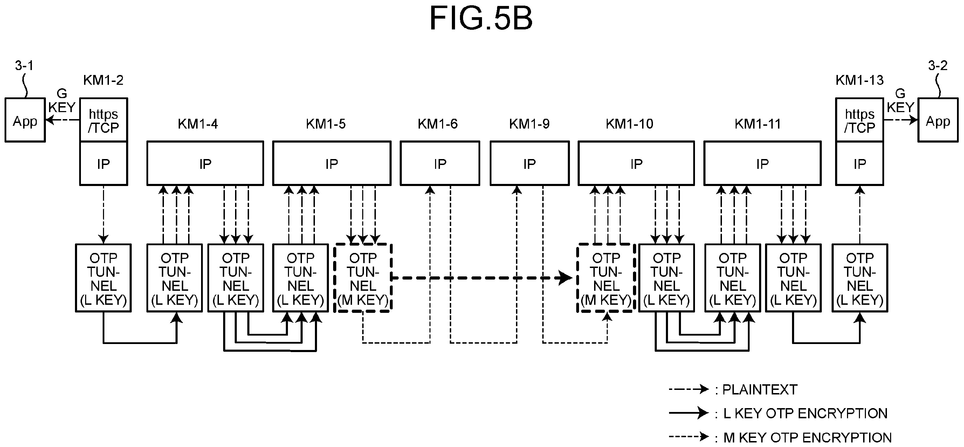

The key relay using the encrypted tunnel with the M key (M-key encrypted tunnel) can tunnel not only a G key relay on a single route but also G key relays on a plurality of routes. Figs. 5A and 5B illustrate an example of a case of tunneling G key relays on a plurality of routes.

Fig. 5A is a diagram illustrating an outline of Operation Example 2 of the QKDN system of the arrangement. In the example of Fig. 5A, not only the G key relay between the KM 1-2 to which the application 3-1 is connected and the KM 1-13 to which the application 3-2 is connected, but also the G key relay between the KM 1-1 to which the application 3-3 is connected and the KM 1-12 to which the application 3-4 is connected, and also the G key relay between the KM 1-3 to which the application 3-5 is connected and the KM 1-14 to which the application 3-6 is connected are transferred by an encrypted tunnel with the M key between the KM 1-5 that is the ingress KM and the KM 1-10 that is the egress KM. This improves the efficiency of the plurality of G key relays.

Fig. 5B is a diagram illustrating an example of the G key relays via the encrypted tunnel (M-key encrypted tunnel) of Fig. 5A. In the example of Fig. 5B, the encrypted tunnel with the M key is used to transfer three G key relays of a G key shared by the applications 3-1 and 3-2, a G key shared by the applications 3-3 and 3-4, and a G key shared by the applications 3-5 and 3-6. Note that, in Fig. 5B, illustrations of the applications 3-3 to 3-6 are omitted for reasons of space limitation.

As described above, in the present arrangement, it is possible to simplify, in the QKDN 100, a system processing procedure and a processing load for performing an encryption key (G key) relay and reduce a processing load and a processing delay related to the G key relay. Further, the G key relay does not only reduce the processing load and the processing delay of a single G key relay route (Fig. 3A) but also exert its effect on a plurality of G key relay routes (Fig. 5A).

In particular, it is possible to improve the efficiency and processing delay of the G key relay operation in the entire system by setting the G key relay via the encrypted tunnel with the M key of the arrangement to the G key relay between the important KMs 1 through which many key relays pass.

Here, advantageous effects of the arrangement are summarized again.
1. The processing load of the G key relay can be reduced.
2. The processing delay (latency) of the G key relay can be reduced.
3. Completing the key relay between the ingress KM and the egress KM in advance makes it possible to be hardly influenced by the congestion associated with a decrease in L key or the like.
4. Considering the total processing load of the key relay of the M key performed in advance between the ingress KM and the egress KM and the key relay of the G key (via the encrypted tunnel with the M key) performed in response to a request from the application 3, a difference from the conventional method cannot be seen. However, by performing the M key relay in advance, the load of encryption/decryption in the KM 1 that performs the G key relay is temporally distributed, and the processing load can be leveled.
5. Preparation can be made for the occurrence of G key relays on a plurality of routes by completing the M key relay in advance between the ingress KM and the egress KM, which are main routes. That is, the processing delay of the G key relays on the plurality of routes can be reduced.

### Example of functional configuration

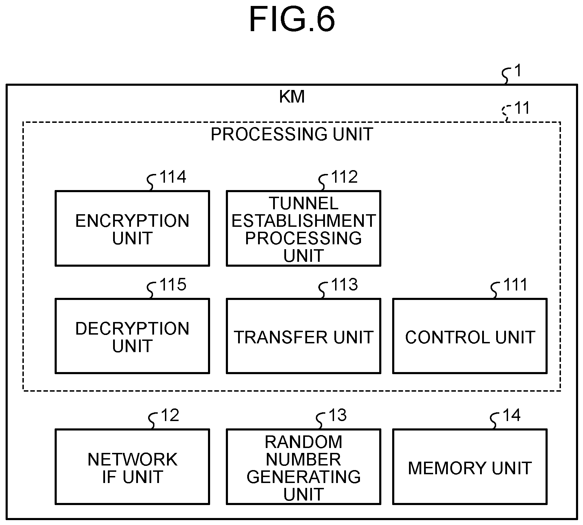

Fig. 6 is a diagram illustrating an example of a functional configuration of the KM 1 according to the arrangement. The KM 1 according to the arrangement includes a processing unit 11, a network IF unit 12, a random number generating unit 13, and a memory unit 14.

The processing unit 11 is implemented by at least one processing device and executes the processing of the KM 1. The processing device includes, for example, a control device and an arithmetic device, and is implemented by an analog or digital circuit or the like. The processing device may be a central processing unit (CPU), or may be a general-purpose processor, a microprocessor, a digital signal processor (DSP), an application specific integrated circuit (ASIC), a field-programmable gate array (FPGA), or a combination thereof.

The processing unit 11 includes a control unit 111, a tunnel establishment processing unit 112, a transfer unit 113, an encryption unit 114, and a decryption unit 115.

In a case where the KM 1 operates as the ingress KM or the egress KM, the control unit 111 determines establishment of the M-key encrypted tunnel and determines stop of the M-key encrypted tunnel.

The tunnel establishment processing unit 112 performs M-key encrypted tunnel establishment processing in a case where the KM 1 operates as the ingress KM or the egress KM. For example, the tunnel establishment processing unit 112 requests another KM 1 (second node) to establish M-key encrypted tunnel communication, and, according to a response from that another KM 1, establishes the M-key encrypted tunnel communication with that another KM 1. Further, for example, when receiving a request for establishing M-key encrypted tunnel communication from another KM 1 (second node) and sending back a response indicating approval to that another KM 1, the tunnel establishment processing unit 112 establishes the M-key encrypted tunnel communication with that another KM 1.

In a case where the KM 1 operates as the ingress KM, the transfer unit 113 transfers the G key via the M-key encrypted tunnel. Further, in a case where the KM 1 operates as the egress KM, the transfer unit 113 receives the G key via the M-key encrypted tunnel. Further, in a case where the KM 1 operates as the relay KM, the transfer unit 113 transfers traffic (simple data forwarding without OTP encryption). The transfer and reception by the transfer unit 113 are performed via the network IF unit 12 described later.

In addition, the transfer unit 113 uses the L key (first encryption key) shared with the adjacent KM 1 (first node) to perform encrypted relay transmission, to the adjacent KM 1, of the M key (second encryption key) used for the M-key encrypted tunnel or the G key (third encryption key) used for the cryptographic communication of the application 3. In the encrypted relay transmission by the transfer unit 113, encryption using the L key is performed by the encryption unit 114 to be described later, and relay transmission of the encrypted M key or the encrypted G key is performed via the network IF unit 12 to be described later.

The encryption unit 114 uses the L key or the M key to encrypt data including the G key.

The decryption unit 115 uses the L key or the M key to decrypt the encrypted data including the G key.

The network IF unit 12 performs connection to the QKD network 100, transmission and reception of data, and the like. The random number generating unit 13 generates an encryption key (G key), independently of the L key. For example, the random number generating unit 13 is implemented by a random number generator or the like.

The memory unit 14 accumulates the L key (first encryption key), the M key (second encryption key), and the G key (third encryption key). The memory unit 14 is implemented by a storage medium such as a hard disk drive (HDD), an optical disk, a memory card, and a random access memory (RAM).

Note that the example of the functional configuration illustrated in Figs. 5A and 5B are an example, and the functional configuration may be changed as appropriate. For example, the memory unit 14 may be provided outside the KM 1. For example, the control unit 111 is not necessarily included in the KM 1 itself, and may be provided in another device in the QKDN system 200, for example.

The outline of the operation of the KM 1 in the QKDN system 200-2 of Fig. 3A is organized. In the following example, a case is described in which the object to be encrypted is not the entire IP packet including the G key data included in the payload and the object to be encrypted is only the G key data included in the payload.
1. The transfer units 113 of the ingress KM (KM 1-5) and the egress KM (KM 1-10) share the M key in advance via the network IF unit 12. Since the M key and the G key are generated and shared in the same way, the M key and the G key are substantially the same as data.
2. The tunnel establishment processing units 112 of the ingress KM and the egress KM establish an M-key encrypted tunnel (OTP encrypted tunnel) using the M key. This enables the transfer units 113 of the ingress KM and the egress KM to directly transfer the G key by OTP communication via the network IF unit 12, and thus, the ingress KM and the egress KM serve as the virtual neighbor KMs.
3. The control unit 111 of the ingress KM (KM 1-5) is requested to relay the G key from the control unit 111 of the KM 1-4 on the access QKDN 100-2.
   Processing of KM 1-5
   (a) The decryption unit 115 performs OTP decryption on the received encrypted G key data with the L key shared with the reception source KM 1.
   (b) The transfer unit 113 refers to routing path information on the G key relay and identifies the KM 1 that is the transfer destination. In the example of Fig. 3A, for example, in a case where the KM 1 that is the transfer destination is the KM 1-13, the transfer is performed via the M-key encrypted tunnel. Therefore, the IP packet becomes an encapsulated IP packet by setting the transfer destination KM 1 to the egress KM (KM 1-10 serving as a virtual next hop).
   (c) The encryption unit 114 encrypts the G key included in the payload with the M key shared with the egress KM, and the transfer unit 113 transfers the encapsulated IP packet including the encrypted G key to the egress KM via the network IF unit 12. Note that the ingress KM transfers the encapsulated IP packet whose destination is the egress KM, but the IP packet is possibly transferred via the KM 1-6, the KM 1-9, or the like as an IP router. Here, each of the KM 1-6 and the KM 1-9 is referred to as a transfer KM.
4. The KM 1 (transfer KM) on the backbone QKDN 100-1 performs only transferring according to the routing path information without decoding the encapsulated IP packet.
5. The transfer unit 113 of the egress KM (KM 1-10) receives the encapsulated IP packet including the encrypted G key addressed to the KM 1-10 via the network IF unit 12.

Processing of KM 1-10
(a) The transfer unit 113 decapsulates the encapsulated IP packet to extract the inner IP packet. Then, the decryption unit 115 decrypts the encrypted G key in the inner IP packet by using the M key shared with the ingress KM that is the transmission source.
(b) The transfer unit 113 refers to the routing path information on the G key relay based on the destination information of the inner IP packet and identifies the next hop KM that is the transfer destination. In the example of Fig. 3A, for example, in a case where the KM 1 that is the transfer destination is the KM 1-13, the next hop KM is the KM 1-11 on the access QKDN 100-3.
(c) The encryption unit 114 encrypts the G key with an L key shared with the KM 1-11, and the transfer unit 113 transfers the IP packet including the encrypted G key in the payload to the KM 1-11 via the network IF unit 12.

Details of the processing after passing through the M-key encrypted tunnel, that is, details of the reception processing and the transfer processing of the KM 1-11 and the reception processing of the KM 1-13 are similar to the description with reference to Fig. 3B, and thus are omitted.

Hereinafter, the determination of encrypted tunnel establishment/stop, the encrypted tunnel establishment processing, the transfer to the encrypted tunnel, the transfer reception from the encrypted tunnel, and the transfer of the encrypted tunnel traffic will be described in order.

### Determination of encrypted tunnel establishment/stop

The determination of encrypted tunnel establishment/stop is performed by the control units 111 of the ingress KM and the egress KM.

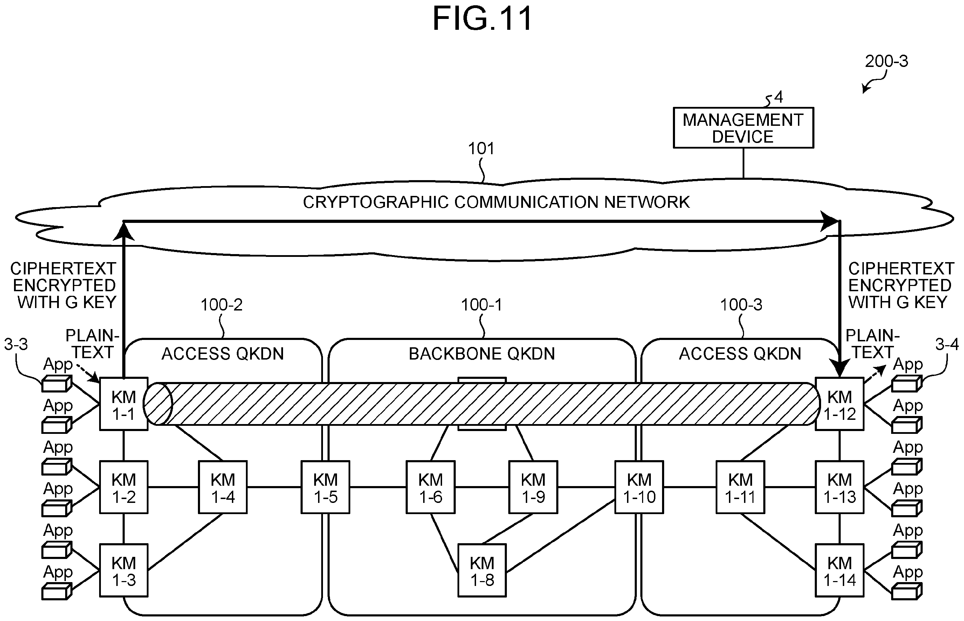

The control unit 111 determines whether or not to establish an M-key encrypted tunnel with a specific KM 1 on the QKDN 100. A specific example of the determination method is exemplified in the following 1 to 4.
1. The control unit 111 controls establishment of the M-key encrypted tunnel or stop of the M-key encrypted tunnel between the KMs 1 designated by a network administrator. For example, the designation by the network administrator is made with configuration information of the KM 1 or the like.
2. The control unit 111 controls establishment of the M-key encrypted tunnel or stop of the M-key encrypted tunnel according to an instruction of a network management manager (for example, a QKDN manager) on the QKDN system 200-2. For example, the control unit 111 of any of the plurality of KMs 1 on the QKDN system 200-2 may have the function of the network management manager.
   Further, for example, a management device having the function of the network management manager may be provided on the QKDN system 200-2, and the control unit 111 of each KM 1 may control establishment of the M-key encrypted tunnel or stop of the M-key encrypted tunnel in accordance with an instruction from the management device. An example of a configuration including the management device will be described later in a second modification (Fig. 11) to the arrangement.
3. Specific example of establishing encrypted tunnel:
   (a) In a case where G key sharing is performed at a certain frequency or more in a specific route, the tunnel establishment processing unit 112 establishes an M-key encrypted tunnel in the corresponding route according to an instruction from the control unit 111. For example, in a case where G key sharing is performed at a certain frequency or more, it is determined whether or not the request amount per unit time (for example, one minute, one hour, one day, and the like) of the G key (third encryption key) shared with another KM 1 (second node) is larger than a first amount.
   (b) In response to an instruction from the control unit 111, the tunnel establishment processing unit 112 establishes an M-key encrypted tunnel on a partial route commonly used in the plurality of G key shared routes.
   (c) In response to an instruction from the control unit 111, the tunnel establishment processing unit 112 establishes an M-key encrypted tunnel between portions QKDN 100-i to 100-j that frequently communicate in the QKDN 100 configured by the n portions QKDN 100-1 to 100-n.
   (d) In a case where the accumulation amount of the M key (second encryption key) used in the M-key encrypted tunnel becomes larger than the first amount and the G key via the M-key encrypted tunnel can be transmitted, the tunnel establishment processing unit 112 establishes an M-key encrypted tunnel according to an instruction from the control unit 111.
4. Specific example of stopping encrypted tunnel:
   (a) In a case where the accumulation amount of the M key used in the M-key encrypted tunnel becomes smaller than a second amount and the G key via the M-key encrypted tunnel cannot be transmitted any more, the tunnel establishment processing unit 112 stops the encrypted tunnel according to an instruction from the control unit 111.
   (b) In a case where it is determined that the frequency at which the M-key encrypted tunnel is used becomes equal to or less than a certain level and the effect of improving the processing efficiency by establishing and using the M-key encrypted tunnel cannot be obtained, the tunnel establishment processing unit 112 stops the M-key encrypted tunnel according to an instruction from the control unit 111. For example, in a case where the consumption amount of the M key used in the M-key encrypted tunnel decreases and the consumption amount becomes equal to or less than a certain value, it is determined that the frequency at which the M-key encrypted tunnel is used has become equal to or less than a certain value.
   (c) In a case where the request amount per unit time (for example, one minute, one hour, one day, and the like) of the G key (third encryption key) shared by the M-key encrypted tunnel with another KM 1 (second node) is smaller than the second amount, the tunnel establishment processing unit 112 stops the M-key encrypted tunnel communication according to an instruction from the control unit 111.

### Encrypted tunnel establishment processing

The encrypted tunnel establishment is performed between the ingress KM and the egress KM.

The encrypted tunnel establishment corresponds to an agreement that a predetermined ingress KM and egress KM perform M key generation/accumulation processing and setting of a virtual next hop for transmitting G key data in an encrypted tunnel with the M key.

For example, the ingress KM and the egress KM perform signaling processing in order to establish an encrypted tunnel. For example, a packet indicating M-key tunnel establishment may be transmitted from the ingress KM to the egress KM by internet key exchange (IKE), which is a signaling protocol used in IPsec. Then, the egress KM may initiate the tunnel operation by receiving the packet indicating M-key tunnel establishment and responding to the ingress KM. At this time, peer authentication may be performed between the ingress KM and the egress KM, or negotiation may be performed on a packet transfer method, an encryption method, a data authentication method, and the like for implementing the M-key encrypted tunnel.

Further, for example, the KM 1 for establishing the M-key encrypted tunnel on the QKDN system 200-2 is designated with the configuration information of the KM 1, and the encrypted tunnel may be established without executing the specific signaling protocol as described above.

In establishing the encrypted tunnel, it is necessary to accumulate a certain number or more of M keys (= G keys) between the ingress KM and the egress KM. In a case where a certain number or more of M keys (= G keys) are not accumulated, first, the transfer unit 113 shares the M key (= G key) between the ingress KM and the egress KM in the manner of a normal G key relay via the network IF unit 12.

The tunnel establishment processing unit 112 performs setting for OTP encryption/decryption using the G key (= M key) shared as described above. The OTP encryption/decryption may be implemented as an M-key encrypted tunnel using a virtual interface. For example, by setting a plurality of virtual interfaces to one physical interface, that one physical interface can be used for a plurality of purposes.

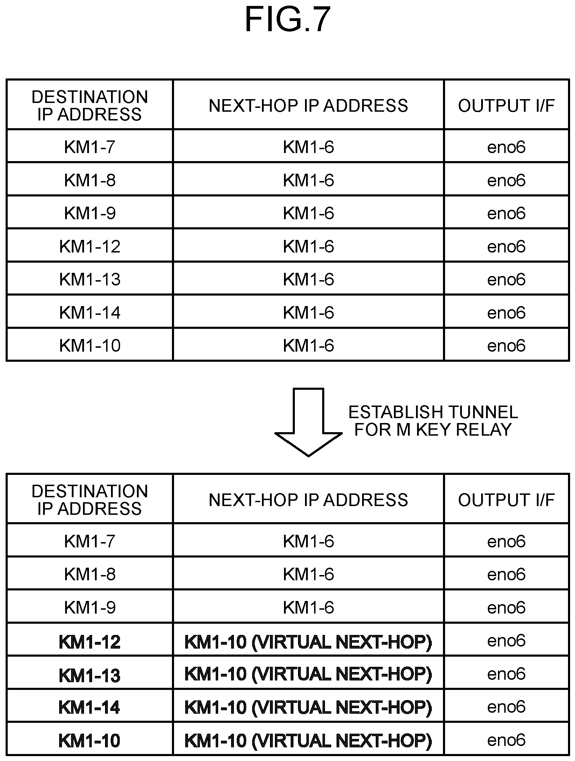

In addition, an IP packet transfer setting for communication between the ingress KM and the egress KM as a virtual next hop may be additionally made. As a specific example, in the ingress KM in which the M-key encrypted tunnel is established, a packet transfer table is updated so that cryptographic communication using the M key is performed in the G key relay addressed to the egress KM. An example of the packet transfer table in the KM 1-5 is illustrated in Fig. 7.

Fig. 7 is a diagram illustrating an update example (case of the KM 1-5) of a packet transfer table according to the arrangement. Before the M-key encrypted tunnel is established (Fig. 2A), for example, in a case where the destination address is the address of the KM 1-12, the Next-hop IP address of the KM 1-5 is the KM 1-6. In this case, the G key transferred to the KM 1-12 is encrypted with the L key shared between the KM 1-5 and the KM 1-6, encapsulated in an IP packet addressed to the KM 1-6, and then transferred.

On the other hand, after the M-key encrypted tunnel is established (Fig. 5A), for example, in a case where the destination address is the address of the KM 1-12, the Next-hop IP address of KM 1-5 is the KM 1-10 (virtual next-hop). In this case, the G key transferred to the KM 1-12 is encrypted with the M key shared between the KM 1-5 and the KM 1-10, encapsulated in an IP packet addressed to the KM 1-10, and then transferred.

### Transfer to encrypted tunnel

The transfer to the encrypted tunnel is performed by the transfer unit 113 of the ingress KM (in Fig. 3A, KM 1-5) via the network IF unit 12.

The transfer unit 113 receives the G key data subjected to the key relay from the KM 1-4 on the access QKDN 100-2 via the network IF unit 12.

The decryption unit 115 decrypts the G key with the L key shared with the KM 1-4 on the access QKDN 100-2 from which the G key data is transferred.

The transfer unit 113 refers to the routing path information to identify the transfer destination node as the egress KM (in Fig. 3A, KM 1-10).

The encryption unit 114 encrypts the G key with the M key shared with the egress KM, and the transfer unit 113 transfers the G key encrypted with the M key to the egress KM via the network IF unit 12 (key relay using an encrypted tunnel with the M key). The transfer destination of the G key encrypted with the M key may be a virtual interface set in the egress KM at the time of establishing the M-key encrypted tunnel.

Note that any method may be used for storing the M key and the G key. For example, the memory unit 14 may store the M key used to establish the M-key encrypted tunnel in a dedicated database (storage area) separately, or may store the M key similarly to the general G key.

### Reception from encrypted tunnel

The reception from the encrypted tunnel is performed by the transfer unit 113 of the ingress KM (in Fig. 3A, KM 1-10) via the network IF unit 12.

The transfer unit 113 receives the G key data encrypted with the M key from the ingress KM (in Fig. 3A, KM 1-5) via the network IF unit 12 by the virtual interface set at the time of establishing the M-key encrypted tunnel.

The decryption unit 115 decrypts the G key data encrypted with the M key by using the M key shared with the ingress KM. Specifically, the decryption unit 115 identifies a transmission source KM from the transmission source of the IP packet including the decrypted G key data, and identifies a decryption key used for decrypting the data (IP packet). That is, the decryption unit 115 determines, according to the transmission source KM, whether to perform decryption with the M key or decryption with a normal L key other than decryption of the M-key encrypted tunnel communication.

Note that the M key shared with the ingress KM is stored in the memory unit 14 in association with, for example, the virtual interface encrypted with the M key and receiving the G key data or the transmission source KM (in Fig. 3A, KM 1-5). Further, for example, the normal L key is stored in the memory unit 14 in association with the transmission source KM.

The transfer unit 113 refers to the routing path information to identify the KM 1 on the access QKDN 100-3 as the transfer destination KM, and the encryption unit 114 encrypts the G key data with the L key shared with the transfer destination KM. The transfer unit 113 then transfers the encrypted G key data to the transfer destination KM via the network IF unit 12.

### Transfer of encrypted tunnel traffic

The transfer of the encrypted tunnel traffic is performed by the transfer unit 113 of the relay KM (in Figs. 2A and 3A, KM 1-6 and KM 1-9) via the network IF unit 12.

The transfer unit 113 receives the IP packet of M-key encrypted tunnel traffic via the network IF unit 12. The transfer unit 113 determines whether the received IP packet is the M-key encrypted tunnel traffic. The transfer unit 113 performs different transfer processing depending on whether or not the received IP packet is the M-key encrypted tunnel traffic.

Specific Exemplary Illustration 1 of the method of determining whether the received IP packet is the M-key encrypted tunnel traffic includes a method of determining whether the destination IP address of the received IP packet is addressed to the subject device. Specifically, whether the destination IP address is addressed to the subject device can be determined from the received IP packet as illustrated in Fig. 4. If the destination of the received IP address is the subject device, then the decryption unit 115 decrypts the IP packet with the L key because the IP packet is not the IP packet of the M-key encrypted tunnel traffic. On the other hand, if the destination of the received IP address is not the subject device, then the decryption unit 115 transfers the IP packet as it is without decrypting or encrypting the IP packet because the IP packet is the IP packet of the M-key encrypted tunnel traffic.

Further, Specific Exemplary Illustration 2 of the method of determining whether the received IP packet is the M-key encrypted tunnel traffic includes a method of using a type of the destination IP address of the received IP packet. In this case, an IP address for transferring the M-key encrypted tunnel traffic (that is, the IP address not to be encrypted/decrypted with the L key) and an IP address for performing normal key relay (that is, the IP address to be encrypted/decrypted with the L key) are operated separately.

Further, Specific Exemplary Illustration 3 of the method of determining whether the received IP packet is the M-key encrypted tunnel traffic includes a method of using a protocol number of data included in the received IP packet. In this case, the protocol number of the IP packet carrying the M-key encrypted tunnel traffic and the protocol number of the IP packet carrying the normal G key relay traffic are separately operated. For example, it is possible to insert the protocol number into the IP packet by IP over IP (IPIP), L2TP/IPsec, GRE, or the like.

In a case where the received IP packet is the M-key encrypted tunnel traffic, the decryption unit 115 does not perform OTP decryption with the L key. The transfer unit 113 performs transfer processing of the M-key encrypted tunnel traffic. To be specific, the transfer unit 113 transfers the IP packet of the M-key encrypted tunnel traffic as a router when the IP packet is transmitted via the network IF unit 12. Further, when the IP packet of the M-key encrypted tunnel traffic is transferred via the network IF unit 12, the transfer unit 113 may set identification information (for example, a protocol number) indicating that the IP packet is the tunnel traffic in the IP packet.

### Example of information processing method

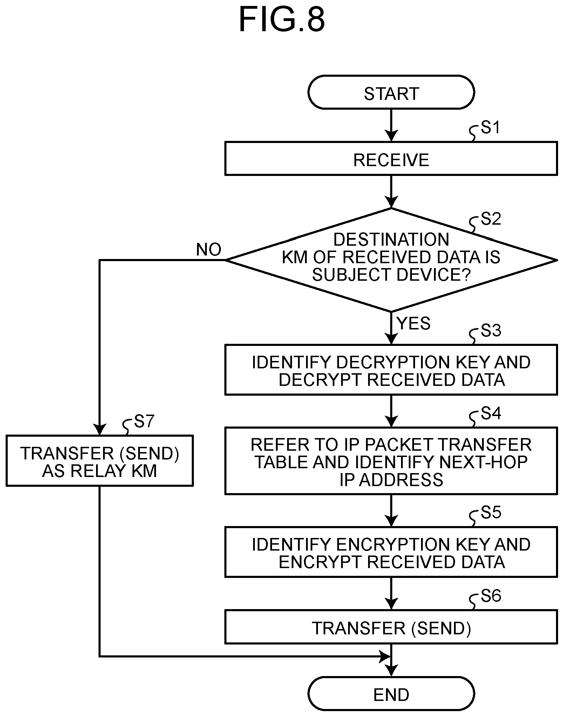

Fig. 8 is a flowchart illustrating an operation example of the KM 1 according to the arrangement. The example of Fig. 8 illustrates an operation example for a case where the KM 1-10 in Fig. 3A operates as the relay KM, the ingress KM, or the egress KM.

First, the transfer unit 113 receives received data (IP packet) from the transmission source KM 1 via the network IF unit 12 (Step Sl). Next, the transfer unit 113 determines whether or not the destination KM of the data received in Step S1 is the subject device (Step S2).

If the destination KM is not the subject device (Step S2, No), then the transfer unit 113 transfers, as the relay KM, the received data as it is via the network IF unit 12 (Step S7).

If the destination KM is the subject device (Step S2, Yes), then the decryption unit 115 identifies a decryption key from the received data and decrypts the received data with the decryption key (Step S3). Specifically, the decryption unit 115 identifies a decryption key used for decryption by identifying the transmission source KM 1 from the transmission source address included in the received data.

For example, in a case where the transmission source KM1 is the KM 1-5, the M key shared with the KM 1-5 is identified as the decryption key used for decryption. Further, for example, in a case where the transmission source KM1 is the KM 1-8, the L key shared with the KM 1-8 is identified as the decryption key used for decryption. Further, for example, in a case where the transmission source KM1 is the KM 1-9, the L key shared with the KM 1-9 is identified as the decryption key used for decryption. Further, for example, in a case where the transmission source KM1 is the KM 1-11, the L key shared with the KM 1-11 is identified as the decryption key used for decryption.

Next, the transfer unit 113 refers to the IP packet transfer table to identify a next hop IP address of the received data (Step S4).

Next, the encryption unit 114 identifies an encryption key from the destination KM 1 corresponding to the next hop IP address, and encrypts the received data with the encryption key (Step S5).

For example, in a case where the destination KM1 is the KM 1-5, the M key shared with the KM 1-5 is identified as the encryption key used for encryption. For example, in a case where the destination KM1 is the KM 1-8, the L key shared with the KM 1-8 is identified as the encryption key used for encryption. For example, in a case where the destination KM1 is the KM 1-9, the L key shared with the KM 1-9 is identified as the encryption key used for encryption. For example, in a case where the destination KM1 is the KM 1-11, the L key shared with the KM 1-11 is identified as the encryption key used for encryption.

Next, the transfer unit 113 transfers the received data encrypted in Step S5 to the destination KM 1 identified based on the next hop IP address via the network IF unit 12 (Step S6) .

As described above, in the KM 1 (an example of the information processing device) of the arrangement, the processing unit 11 establishes M-key encrypted tunnel communication with the second node by using the M key (second encryption key) that is subjected to encrypted relay transmission to the second node that is one of the plurality of KMs 1 by the L key (first encryption key) shared, by quantum key distribution, with the plurality of KMs 1 (first nodes) adjacent to each other. Then, the processing unit 11 causes the network IF unit 12 to transfer the G key (third encryption key) to the second node by the M-key encrypted tunnel communication.

This enables, according to the KM 1 of the arrangement, reduction in processing load in the encryption key (G key) relay even if the scale of the QKD network increases. For example, the encrypted tunnel using the M key is preferably set between the KMs 1 having a higher communication frequency. The KMs 1 between which a communication frequency is high are, for example, KMs 1 (for example, in the example of Fig. 2A, the KM 1-5 and the KM 1-10) corresponding to the gateway of the QKDN 100.

Note that, in a case where G key relay across QKDNs 100 with different key sharing and different relay methods, setting in advance an encrypted tunnel using an M key corresponds to concealment of the key relay method in the corresponding QKDN 100. For example, in the example of Fig. 2A, setting the M-key encrypted tunnel in advance in the KM 1-5 and the KM 1-10 corresponds to hiding the backbone QKDN 100-1.

### First modification to arrangement

The description goes on to the first modification to the arrangement. In the description of the first modification, the description similar to the arrangement is omitted, and portions different from the arrangement is described. In the first modification, a case where the M-key encrypted tunnel using the M key is established between the end KMs 1 with which the connected application 3 frequently communicates will be described.

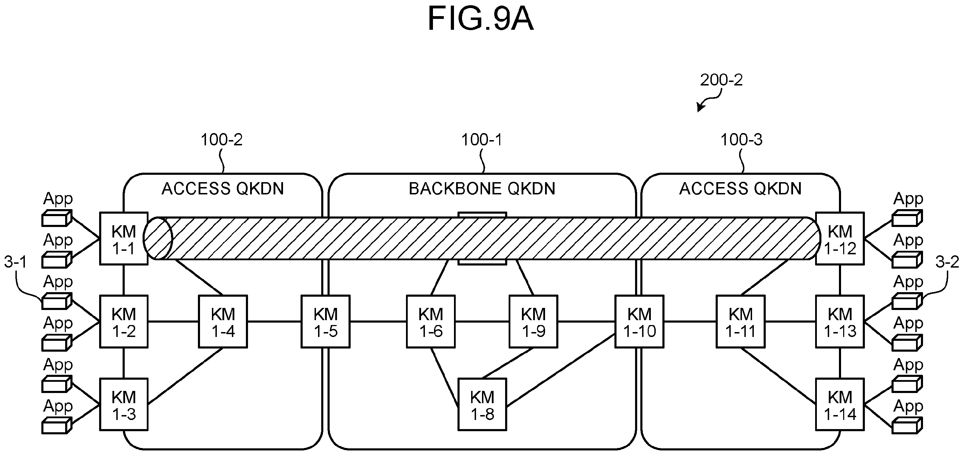

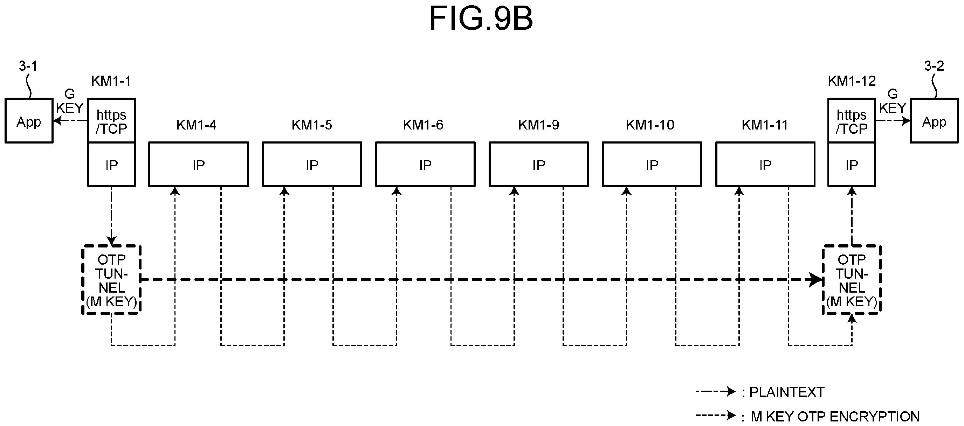

Fig. 9A is a diagram illustrating an outline of an operation example of a QKDN system 200-2 of the first modification to the arrangement. Fig. 9B is a diagram illustrating an example of a G key relay via the M-key encrypted tunnel in Fig. 9A.

The KM 1-1 provides an encryption key (G key) to the application 3-1. Similarly, the KM 1-12 provides an encryption key (G key) to the application 3-2.

In addition, the KM 1-1 and the KM 1-12 can easily make the determination autonomously as to (a) "case where G key sharing is performed at a certain frequency or more in a specific route" in "3. Specific example of establishing encrypted tunnel" in the determination of encrypted tunnel establishment/stop described above. That is, the KM 1-1 and the KM 1-12 can autonomously perform determination of the M-key encrypted tunnel establishment/stop without receiving an instruction from an external QKDN manager.

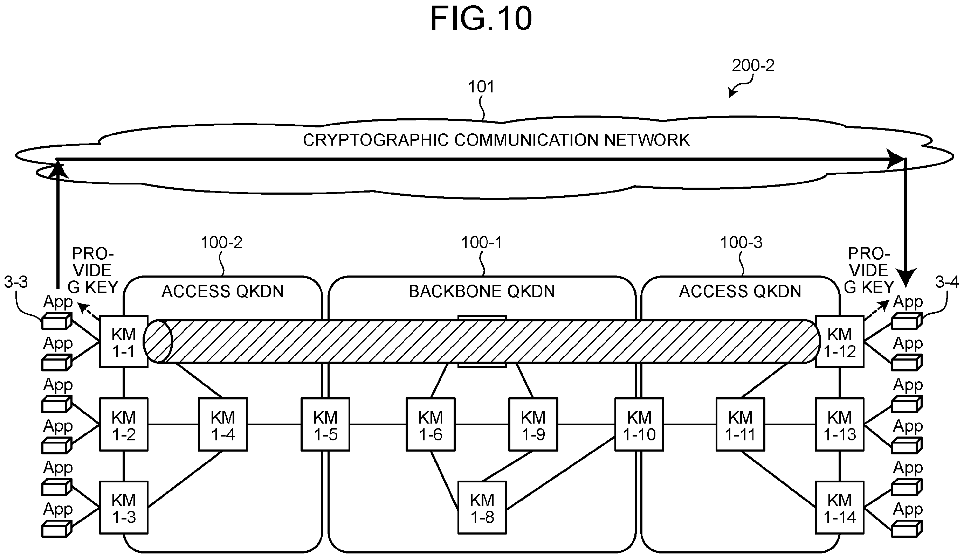

Fig. 10 is an overall view illustrating an example of the QKDN system 200-2 according to the first modification to the arrangement. As illustrated in Fig. 10, the QKDN system 200-2 according to the first modification further includes a cryptographic communication network 101.

In the example of Fig. 10, the processing unit 11 of the KM 1-1 provides the connected application 3 (for example, the application 3-3) with the G key (third encryption key) shared via the encrypted tunnel with the M key, or the G key (third encryption key) shared by a normal key relay using the L key.

The application 3-3 encrypts a communication message (plaintext) to the communication destination application 3-4 using the G key received from the KM 1-1, and transmits the encrypted message to the application 3-4 via the cryptographic communication network 101.

Note that the encryption method used by the application 3-3 may be OTP, advanced encryption standard (AES), or any encryption method. In addition, the cryptographic communication network 101 may be implemented on the same network as the QKDN 100 in which the KM 1 implements the key relay, or may be configured as another network.

### Second modification to arrangement

The description goes on to the second modification to the arrangement. In the description of the second modification, the description similar to the arrangement is omitted, and portions different from the arrangement is described. In the second modification, a case is described in which the KM 1 further has a function of receiving plaintext data from the application 3, encrypting the plaintext data with the G key, and transmitting the ciphertext to the application 3 as a communication destination, and a function of decrypting the ciphertext.

Fig. 11 is an overall view illustrating an example of a QKDN system 200-3 according to the second modification to the arrangement. In the example of Fig. 11, the processing unit 11 of the KM 1-1 encrypts the plaintext data received from the application 3-3 with the G key, and transmits the ciphertext to the application 3-4 as a communication destination via the cryptographic communication network 101.

In addition, the processing unit 11 of the KM 1-12 transmits, to the application 3-4, the plaintext obtained by decrypting the ciphertext received via the cryptographic communication network 101 with the G key shared with the KM 1-1.

In addition, in Fig. 11, a management device 4 having a function of a network management manager that controls establishment and stop of M-key encrypted tunnel communication is provided on the cryptographic communication network 101. The control unit 111 of each KM 1 may control establishment of the M-key encrypted tunnel or stop of the M-key encrypted tunnel according to an instruction from the management device 4. The management device 4 receives an instruction to operate and stop the M-key encrypted tunnel communication, for example, from an administrator of the QKDN system 200-3. The management device 4 may be provided somewhere other than the cryptographic communication network 101. For example, the management device 4 may be provided on the QKDN 100.

### Example of functional configuration

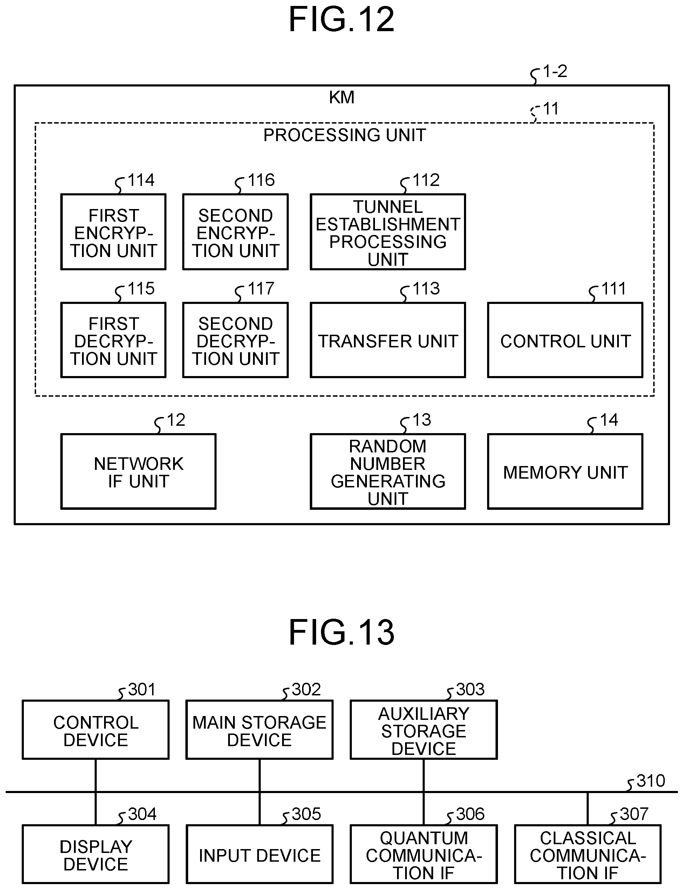

Fig. 12 is a diagram illustrating an example of a functional configuration of the KM 1 according to the arrangement. The KM 1 according to the second modification includes the processing unit 11, the network IF unit 12, the random number generating unit 13, and the memory unit 14.

The processing unit 11 includes the control unit 111, the tunnel establishment processing unit 112, the transfer unit 113, a first encryption unit 114, a first decryption unit 115, a second encryption unit 116, and a second decryption unit 117. Since the control unit 111, the tunnel establishment processing unit 112, the first encryption unit 114, and the first decryption unit 115 are similar to the control unit 111, the tunnel establishment processing unit 112, the encryption unit 114, and the decryption unit 115 of the arrangement, the description thereof will be omitted.

The second encryption unit 116 encrypts the plaintext data received from the application 3 with the G key (third encryption key) shared with the destination KM 1 to generate ciphertext.

The second decryption unit 117 decrypts the ciphertext received via the cryptographic communication network 101 with the G key (third encryption key) shared with the transmission source KM 1 to generate plaintext data.

The transfer unit 113 of the second modification further, via the network IF unit 12, receives the plaintext data from the application 3, transfers the ciphertext generated by the second encryption unit 116, receives the ciphertext transmitted from the transmission source KM 1, and transfers the plaintext data generated by the second decryption unit 117.

Note that, as in the case of the first modification, the encryption method used for encrypting the plaintext data and decrypting the ciphertext may be OTP, AES, or any encryption method. In addition, the cryptographic communication network 101 may be implemented on the same network as the QKDN 100 in which the KM 1 implements the key relay, or may be configured as another network.

Finally, examples of the hardware configuration of the KM device (KM 1) and the QKD device (QKD 2) according to the arrangement, and of the management device 4 according to the second modification will be described.

### Example of hardware configuration

Fig. 13 is a diagram illustrating an example of a hardware configuration of the QKD 2 according to the arrangement. The QKD 2 of the arrangement includes a control device 301, a main storage device 302, an auxiliary storage device 303, a display device 304, an input device 305, a quantum communication interface (IF) 306, and a classical communication IF 307.

The control device 301, the main storage device 302, the auxiliary storage device 303, the display device 304, the input device 305, the quantum communication IF 306, and the classical communication IF 307 are connected to one another via a bus 310.

The control device 301 executes a program read from the auxiliary storage device 303 to the main storage device 302. The main storage device 302 is a memory such as a read only memory (ROM) and a RAM. The auxiliary storage device 303 is an HDD, a memory card, or the like.

The display device 304 displays a state of the QKD 2 and the like. The input device 305 receives an input from a user. Note that the display device 304 and the input device 305 may be implemented by a touch panel or the like having a display function and an input function. In addition, the display device 304 and the input device 305 do not have to be provided in the QKD 2. In this case, for example, a display function and an input function of an external terminal connected to the QKD 2 are used.

The quantum communication IF 306 is an interface for connecting to a QKD link in which photons are transmitted. The classical communication IF 307 is an interface for connecting to a transmission path in which a control signal and the like are transmitted.

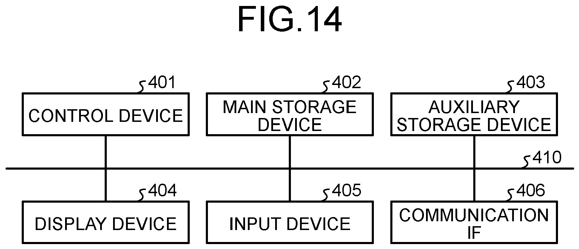

Fig. 14 is a diagram illustrating an example of a hardware configuration of the KM 1 according to the arrangement. The KM 1 of the arrangement includes a control device 401, a main storage device 402, an auxiliary storage device 403, a display device 404, an input device 405, and a communication IF 406.

The control device 401, the main storage device 402, the auxiliary storage device 403, the display device 404, the input device 405, and the communication IF 406 are connected to one another via a bus 410.

The control device 401 executes a program read from the auxiliary storage device 403 to the main storage device 402. The main storage device 402 is a memory such as a ROM and a RAM. The auxiliary storage device 403 is an HDD, a memory card, or the like.

The display device 404 displays a state of the KM 1 and the like. The input device 405 receives an input from a user. Note that the display device 404 and the input device 405 may be implemented by a touch panel or the like having a display function and an input function. In addition, the display device 404 and the input device 405 do not have to be provided in the KM 1. In this case, for example, a display function and an input function of an external terminal connected to the KM 1 are used.

The communication IF 406 is an interface for connecting to a transmission path.

Note that the hardware configuration of the management device 4 of the second modification is also similar to the hardware configuration of the KM 1 illustrated in Fig. 14.

A program to be executed by the KM 1 and the QKD 2 of the arrangement is stored as a file of a format that can be installed or executed and recorded on a computer-readable storage medium such as a CD-ROM, a memory card, a CD-R, or a digital versatile disk (DVD) and is provided as a computer program product.

Further, the program executed by the KM 1 and the QKD 2 of the arrangement may be stored on a computer connected to a network such as the Internet, and provided after being downloaded via the network.

Further, the program executed by the KM 1 and the QKD 2 of the arrangement may be provided via a network such as the Internet without being downloaded.

Further, the program executed by the KM 1 and the QKD 2 of the arrangement may be installed on the ROM or the like in advance and provided.

The program executed by the KM 1 of the arrangement has a module configuration including functions that can be implemented by the program among the functional configurations of the KM 1. The control device 401 reads the program from the storage medium such as the auxiliary storage device 403 and executes the program, whereby the function implemented by the program is loaded to the main storage device 402. That is, the function implemented by the program is generated on the main storage device 402.

Some or all of the functions of the KM 1 may be implemented by hardware such as an integrated circuit (IC). The IC is, for example, a processor that executes dedicated processing.

In addition, in a case where each function is implemented by using a plurality of processors, each processor may achieve one of the functions or may achieve two or more of the functions.

In addition, the operation forms of the KM 1 and the QKD 2 may be arbitrary. The KM 1 and the QKD 2 may be operated as, for example, the QKDN system 200 that achieves cryptographic communication of a cloud system on a network.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

### Appendix

The above arrangements can be summarized in the following technical examples.

Example 1. According to an arrangement, an information processing device (1) includes a processing unit (11). The processing unit (11) is configured to establish encrypted tunnel communication with a second node by using a second encryption key subjected to encrypted relay transmission to the second node by a first encryption key shared, by quantum key distribution, with a plurality of first nodes adjacent to each other, where the second node is one of the plurality of first nodes. Additionally, the processing unit (11) is configured to cause a network interface (IF) unit (12) to transfer a third encryption key to the second node by the encrypted tunnel communication.

Example 2. In the information processing device (1) according to example 1, the information processing device (1) is one of the plurality of first nodes, and the processing unit (11) is configured to perform encrypted relay transmission of the second encryption key to a first node adjacent to the information processing device (1) by using a first encryption key shared with the first node adjacent to the information processing device (1).

Example 3. In the information processing device (1) according to example 1 or 2, the information processing device (1) is configured to communicate with at least one application, and the processing unit (11) is configured to provide the third encryption key to the application.

Example 4. In the information processing device (1) according to example 1 or 2, the information processing device (1) is configured to communicate with at least one first application. The processing unit (11) is configured to generate encrypted data by encrypting plaintext data received from the first application with the third encryption key, and cause the network IF unit (12) to transfer the encrypted data to the second node.

Example 5. In the information processing device (1) according to any one of examples 1 to 4, the processing unit (11) is configured to encapsulate a first communication packet including data obtained by encrypting the third encryption key with the second encryption key, in a second communication packet whose source is an address of the information processing device (1) and whose destination is an address of the second node, and cause the network IF unit (12) to transfer the second communication packet to the second node.

Example 6. In the information processing device (1) according to any one of examples 1 to 5, the processing unit (11) is configured to request the second node to establish the encrypted tunnel communication, and establish encrypted tunnel communication with the second node according to a response from the second node.

Example 7. In the information processing device (1) according to any one of examples 1 to 6, when receiving a request for establishing the encrypted tunnel communication from the second node and sending back a response indicating approval to the second node, the processing unit (11) is configured to establish encrypted tunnel communication with the second node.

Example 8. The information processing device (1) according to any one of examples 1 to 7, further includes a memory unit (14) configured to store the first encryption key, the second encryption key, and the third encryption key therein. The processing unit (11) is configured to establish the encrypted tunnel communication in a case where a storage amount of the second encryption key shared with the second node is larger than a first amount, and stop the encrypted tunnel communication in a case where the storage amount is smaller than a second amount.

Example 9. In the information processing device (1) according to any one of examples 1 to 8, the processing unit (11) is configured to control establishment and stop of encrypted tunnel communication with the second node according to an instruction from a management device configured to control establishment and stop of the encrypted tunnel communication.

Example 10. In the information processing device (1) according to any one of examples 1 to 9, the processing unit (11) is configured to establish the encrypted tunnel communication in a case where a request amount per unit time of the third encryption key shared with the second node is larger than a first amount, and stop the encrypted tunnel communication in a case where the request amount is smaller than a second amount.

Example 11. According to an arrangement, a quantum key distribution (QKD) network system (200) includes a plurality of first nodes, a plurality of QKD devices, a first application, and a second application. The plurality of first nodes includes the information processing device (1) according to example 1 or 2 and the second node. The plurality of QKD devices is configured to generate the first encryption key by quantum key distribution, and provide the generated first encryption key to any of the plurality of first nodes. The first application is configured to receive the third encryption key from the information processing device (1) according to example 1 or 2. The second application is configured to receive the third encryption key from the second node.

Example 12. According to an arrangement, an information processing method is implemented by a computer of an information processing unit (11). The method includes establishing encrypted tunnel communication with a second node by using a second encryption key subjected to encrypted relay transmission to the second node by a first encryption key shared, by quantum key distribution, with a plurality of first nodes adjacent to each other, where the second node is one of the plurality of first nodes. The method further includes transferring a third encryption key to the second node by the encrypted tunnel communication.

Example 13. According to an arrangement, a computer program product has a computer readable medium including programmed instructions stored thereon. When executed by a computer, the instructions cause the computer to establish encrypted tunnel communication with a second node by using a second encryption key subjected to encrypted relay transmission to the second node by a first encryption key shared, by quantum key distribution, with a plurality of first nodes adjacent to each other where the second node is one of the plurality of first nodes; and transfer a third encryption key to the second node by the encrypted tunnel communication.

## Claims

1. An information processing device (1) comprising:
a processing unit (11) configured to:
establish encrypted tunnel communication with a second node by using a second encryption key subjected to encrypted relay transmission to the second node by a first encryption key shared, by quantum key distribution, with a plurality of first nodes adjacent to each other, the second node being one of the plurality of first nodes, and
cause a network interface (IF) unit (12) to transfer a third encryption key to the second node by the encrypted tunnel communication.

2. The information processing device (1) according to claim 1, wherein
the information processing device (1) is one of the plurality of first nodes, and
the processing unit (11) is configured to perform encrypted relay transmission of the second encryption key to a first node adjacent to the information processing device (1) by using a first encryption key shared with the first node adjacent to the information processing device (1) .

3. The information processing device (1) according to claim 1 or 2, wherein
the information processing device (1) is configured to communicate with at least one application, and
the processing unit (11) is configured to provide the third encryption key to the application.

4. The information processing device (1) according to claim 1 or 2, wherein
the information processing device (1) is configured to communicate with at least one first application, and
the processing unit (11) is configured to
generate encrypted data by encrypting plaintext data received from the first application with the third encryption key, and
cause the network IF unit (12) to transfer the encrypted data to the second node.

5. The information processing device (1) according to claim 1 or 2, wherein
the processing unit (11) is configured to:
encapsulate a first communication packet including data obtained by encrypting the third encryption key with the second encryption key, in a second communication packet whose source is an address of the information processing device (1) and whose destination is an address of the second node, and
cause the network IF unit (12) to transfer the second communication packet to the second node.

6. The information processing device (1) according to claim 1 or 2, wherein
the processing unit (11) is configured to:
request the second node to establish the encrypted tunnel communication, and
establish encrypted tunnel communication with the second node according to a response from the second node.

7. The information processing device (1) according to claim 1 or 2, wherein
when receiving a request for establishing the encrypted tunnel communication from the second node and sending back a response indicating approval to the second node, the processing unit (11) is configured to establish encrypted tunnel communication with the second node.

8. The information processing device (1) according to claim 1 or 2, further comprising
a memory unit (14) configured to store the first encryption key, the second encryption key, and the third encryption key therein, wherein
the processing unit (11) is configured to:
establish the encrypted tunnel communication in a case where a storage amount of the second encryption key shared with the second node is larger than a first amount, and
stop the encrypted tunnel communication in a case where the storage amount is smaller than a second amount.

9. The information processing device (1) according to claim 1 or 2, wherein
the processing unit (11) is configured to control establishment and stop of encrypted tunnel communication with the second node according to an instruction from a management device configured to control establishment and stop of the encrypted tunnel communication.

10. The information processing device (1) according to claim 1 or 2, wherein
the processing unit (11) is configured to:
establish the encrypted tunnel communication in a case where a request amount per unit time of the third encryption key shared with the second node is larger than a first amount, and
stop the encrypted tunnel communication in a case where the request amount is smaller than a second amount.

11. A quantum key distribution (QKD) network system (200) comprising:
a plurality of first nodes including the information processing device (1) according to claim 1 or 2 and the second node;
a plurality of QKD devices configured to:
generate the first encryption key by quantum key distribution, and
provide the generated first encryption key to any of the plurality of first nodes;
a first application configured to receive the third encryption key from the information processing device (1) according to claim 1 or 2; and
a second application configured to receive the third encryption key from the second node.

12. An information processing method implemented by a computer of an information processing unit (11), the method comprising:
establishing encrypted tunnel communication with a second node by using a second encryption key subjected to encrypted relay transmission to the second node by a first encryption key shared, by quantum key distribution, with a plurality of first nodes adjacent to each other, the second node being one of the plurality of first nodes; and
transferring a third encryption key to the second node by the encrypted tunnel communication.

13. A computer program product having a computer readable medium including programmed instructions stored thereon, wherein the instructions, when executed by a computer, cause the computer to:
establish encrypted tunnel communication with a second node by using a second encryption key subjected to encrypted relay transmission to the second node by a first encryption key shared, by quantum key distribution, with a plurality of first nodes adjacent to each other, the second node being one of the plurality of first nodes; and
transfer a third encryption key to the second node by the encrypted tunnel communication.
